# FASCICULE DE BREVET EUROPEEN

(11) **EP 1 274 265 B1**
(45) Date de publication et mention de la délivrance du brevet: **03.09.2008**
(21) Numéro de dépôt: 02291592.0
(22) Date de dépôt: 26.06.2002
(51) Int. Cl.: H04Q 7/22, H04L 12/56

(54) **Procédé d'émission de blocs de signal modulé, station émettrice et source de données pour la mise en oeuvre du procédé**
Verfahren zur Übertragung von Signalblöcke eines moduliertes Signals, Sendestation und Datenquelle dafür
Procedure for transmission of modulated signal blocks, transmission station and data source according to the procedure

(30) Priorité: 02.07.2001 FR 0108754
(43) Date de publication de la demande: 08.01.2003
(73) Titulaire: Nortel Networks Limited, St Laurent, Québec H4S 2A9 (CA)
(72) Inventeur: Cayla, Stéphane, 78220 Viroflay (FR); Eskicioglu, Suat, 75016 Paris (FR)
(74) Mandataire: Loisel, Bertrand

(56) Documents cités:
- US-A- 5 859 840
- US-A- 6 005 855

## Description

La présente invention concerne les techniques de transmission de blocs de données de taille variable sur des liaisons synchrones, ces blocs de données servant à former des blocs de signal modulé qui sont ensuite émis sur des canaux physiques multiplexés.

Elle a notamment des applications dans des systèmes de radiocommunication avec les mobiles pouvant fonctionner en mode paquets, tels que des réseaux GPRS (« General Packet Radio Service »).

Sur les canaux physiques multiplexés, les blocs de signal modulé sont souvent émis selon une structure de trame définissant des périodes d'émission de blocs successives sur chaque canal. Par exemple, la périodicité des blocs radio GPRS est de 20 ms.

Les blocs de signal modulé peuvent faire l'objet d'une protection variable contre les erreurs de transmission. Ceci peut être réalisé en réglant le rendement du codeur de canal généralement prévu dans la chaîne de transmission, soit en sélectionnant le code appliqué parmi plusieurs codes en blocs ou convolutifs, soit en ajustant un degré de poinçonnage du code. Une autre possibilité est de faire varier le niveau de protection par le choix d'une modulation plus ou moins robuste : pour une durée de symbole donnée dans le signal modulé, une modulation binaire, par exemple, procurera plus de protection qu'une modulation quaternaire ou 8-aire.

Du fait de la protection variable contre les erreurs de transmission, les blocs de signal modulé sont formés à partir de blocs de données de taille variable. Dans certains systèmes, la construction de ces blocs de données de taille variable et leur transformation en blocs de signal modulé par codage et modulation ne sont pas effectuées au même endroit, de sorte qu'il faut transmettre ces blocs de taille variable depuis leur source jusqu'au codeur.

Dans l'exemple des liaisons descendantes dans les réseaux GPRS, la source de données qui construit les blocs de taille variable est appelée PCU (« Packet Control Unit »), et le codeur et le modulateur se trouvent dans les stations de base d'émission/réception ou BTS (« Base Transceiver Station »). Dans le cas fréquent où le PCU est distant de la BTS, les blocs non codés sont transmis sur une liaison synchrone à multiplexage temporel. Ces liaisons reposent sur une technique normalisée de modulation par impulsions codées (MIC, ou PCM : « Pulse Code Modulation »). Chaque canal physique sur l'interface radio est associé à un canal dédié sur la liaison synchrone, constitué par une sous-voie MIC à 16 kbit/s. Une voie MIC, appelée DS0, assure un débit de 64 kbit/s, à raison d'un octet toutes les 125 µs. Les circuits MIC supportent jusqu'à 32 voies DS0 dans le cas d'une interface synchrone de type E1 (2,048 Mbit/s), ou jusqu'à 24 voies DS0 dans le cas d'une interface synchrone de type T1 (1,544 Mbit/s).

Un problème que posent les systèmes de ce type est que la capacité d'un canal dédié de la liaison synchrone sur une période d'émission de bloc peut être insuffisante vis-à-vis des blocs ayant les plus grandes tailles, c'est-à-dire ceux qui contiennent les données les moins protégées. Une allocation fixe de plusieurs canaux de la liaison synchrone à chaque canal physique est possible, mais elle conduit à un surdimensionnement coûteux de la capacité de transmission.

US 5,859,840 et US 6,005,855 divulguent une allocation dynamique de ressources radio. Un canal radio additionnel est ainsi utilisé en plus du canal radio primaire pour des transmissions radio de données à haut débit.

Un but de la présente invention est de proposer un mode de transmission de blocs de données de taille variable qui évite le problème ci-dessus tout en limitant la complexité et le coût des équipements.

L'invention propose ainsi un procédé d'émission de blocs de signal modulé sur des canaux physiques multiplexés, dans lequel les blocs de signal modulé sont formés par une station émettrice à partir de blocs de données respectifs de taille variable reçus d'une source de données sur une liaison synchrone à multiplexage temporel, et sont émis avec une cadence de blocs déterminée sur chaque canal physique. La liaison synchrone entre la source de données et la station émettrice supporte des canaux dédiés respectivement associés auxdits canaux physiques, offrant chacun une capacité de transmission déterminée sur une période d'émission inverse de la cadence de blocs, et des canaux supplémentaires. Une partie au moins de chaque bloc de données à partir duquel est formé un bloc de signal modulé émis sur un canal physique est transmise de la source de données à la station émettrice sur le canal dédié associé audit canal physique, et lorsque la taille dudit bloc de données dépasse ladite capacité de transmission, une autre partie dudit bloc de données est transmise sur au moins un canal supplémentaire de la liaison synchrone, alloué dynamiquement audit canal physique.

On réalise ainsi un multiplexage statistique du trafic excédentaire par rapport à la capacité des canaux dédiés, de sorte que l'opérateur peut dimensionner les liaisons synchrones en fonction d'estimations du trafic moyen, et non en fonction du débit maximum susceptible de passer par chaque canal physique.

Un autre aspect de l'invention se rapporte à une source de données pour la mise en oeuvre du procédé, comprenant :
- des moyens de construction de blocs de données de taille variable en vue de l'émission de blocs de signal modulé respectifs sur des canaux physiques multiplexés par une station émettrice distante, les blocs de signal modulé étant émis avec une cadence de blocs déterminée sur chaque canal physique ;
- des moyens de transmission des blocs de données à la station émettrice par une liaison synchrone supportant des canaux dédiés respectivement associés auxdits canaux physiques, offrant chacun une capacité de transmission déterminée sur une période d'émission inverse de la cadence de blocs, et des canaux supplémentaires ;
- des moyens d'allocation dynamique d'au moins un canal supplémentaire de la liaison synchrone à chaque canal physique pour lequel a été construit un bloc de données de taille supérieure à ladite capacité de transmission ; et
- des moyens de segmentation des blocs de données pour diviser chaque bloc de données, construit en vue de l'émission d'un bloc de signal modulé sur un canal physique et ayant une taille supérieure à ladite capacité de transmission, en une partie transmise sur le canal dédié associé audit canal physique, et au moins une autre partie transmise sur un canal supplémentaire de la liaison synchrone, respectivement alloué dynamiquement audit canal physique.

Un troisième aspect de l'invention se rapporte à une station émettrice pour la mise en oeuvre du procédé, comprenant :
- des moyens de formation de blocs de signal modulé à partir de blocs de données respectifs de taille variable ;
- des moyens d'émission des blocs de signal modulé sur des canaux physiques multiplexés, avec une cadence de blocs déterminée sur chaque canal physique ; et
- des moyens de réception des blocs de données en provenance d'une source de données par une liaison synchrone supportant des canaux dédiés respectivement associés auxdits canaux physiques, offrant chacun une capacité de transmission déterminée sur une période d'émission inverse de la cadence de blocs, et des canaux supplémentaires.

Les moyens de réception des blocs de données comprennent des moyens pour déterminer une allocation dynamique de canaux supplémentaires de la liaison synchrone à au moins un des canaux physiques multiplexés au cours d'une période d'émission, et pour assembler chaque bloc de données ayant une taille supérieure à ladite capacité de transmission, avec une partie de bloc reçue sur un canal dédié associé à un canal physique et au moins une autre partie de bloc reçue sur un canal supplémentaire respectif de la liaison synchrone, alloué dynamiquement audit canal physique.

D'autres particularités et avantages de la présente invention apparaîtront dans la description ci-après d'exemples de réalisation non limitatifs, en référence aux dessins annexés, dans lesquels :
- la figure 1 est un schéma d'un réseau de type GPRS auquel l'invention peut s'appliquer;
- la figure 2 est un schéma synoptique d'une unité de contrôle de paquets d'un tel réseau, adaptée à la mise en oeuvre de l'invention ;
- la figure 3 est un schéma synoptique d'une unité d'émission/réception d'une station de base conforme à l'invention et appartenant au réseau de la figure 1.

L'invention est décrite ci-après dans son application à des réseaux GPRS. Ces réseaux ont été développés pour permettre la transmission de données en mode paquets dans des réseaux cellulaires de type GSM (« Global System for Mobile communications »). On considérera plus particulièrement la transmission de paquets dans le sens descendant, c'est-à-dire de l'infrastructure du réseau vers les stations mobiles.

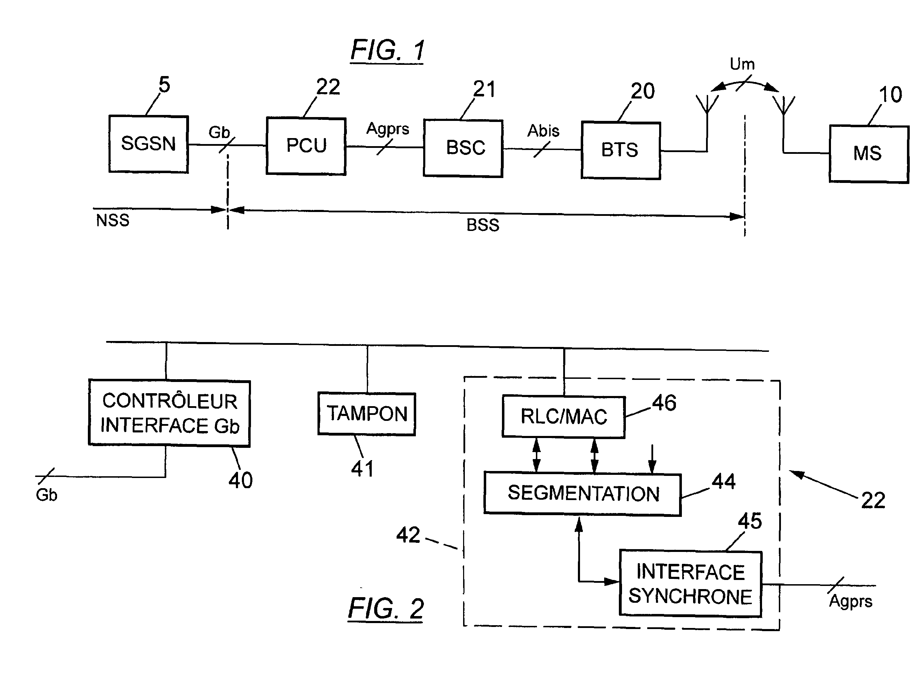

Le réseau GPRS illustré sur la figure 1 est bâti sur une infrastructure GSM, et classiquement divisé en un coeur de réseau, aussi appelé sous-système de réseau et de commutation ou NSS (« Network and Switching Subsystem »), et un réseau d'accès radio également appelé sous-système de stations de base ou BSS (« Base Station Subsystem »).

Pour le service de paquets, les commutateurs du NSS sont appelés noeuds de support GPRS ou GSN (« GPRS Support Node »). On distingue les SGSN (« Serving GSN ») 5 qui sont reliés au BSS par l'intermédiaire d'une interface appelée Gb, et les GGSN (« Gateway GSN », non représentés) qui servent de passerelle avec des réseaux extérieurs de transmission de paquets, tels que par exemple le réseau Internet.

Une description générale de l'interface radio, appelée Um, entre les stations mobiles (MS) 10 et les stations de base (BTS) 20 du BSS est fournie dans la spécification technique ETSI TS 101 350, « Digital cellular telecommunications system (Phase 2+); General Packet Radio Service (GPRS) ; Overall description of the GPRS radio interface ; Stage 2 (GSM 03.64, version 8.5.0, Release 1999), publiée par l'ETSI (European Telecommunications Standards Institute) en août 2000.

Chaque station de base 20 est supervisée par un contrôleur de stations de base ou BSC (« Base Station Controller ») 21 par l'intermédiaire d'une interface appelée Abis. Pour gérer la transmission de paquets GPRS, le BSS comprend en outre une unité de contrôle de paquets (PCU) 22. La localisation du PCU à l'intérieur du BSS n'est pas normalisée. L'invention est généralement applicable chaque fois que la source de données constituée par le PCU est distant des stations émettrices constituées par les BTS. Dans l'exemple représenté sur la figure 1, le PCU 22 est situé entre le BSC 21, avec lequel il communique à travers une interface appelée Agprs, et le NSS, avec lequel il communique à travers l'interface Gb.

La figure 2 illustre une structure possible d'un PCU 22 situé entre un SGSN 5 et un BSC 21, comme dans l'exemple de la figure 1. La référence 40 désigne le contrôleur d'interface Gb pour la liaison avec le SGSN 5.

L'interface Gb est de type asynchrone. Elle repose sur le protocole de relais de trame (FR, « Frame Relay »), ainsi qu'un protocole appelé BSSGP (« BSS GPRS Protocol ») qui transporte des informations de routage et de qualité de service entre le BSS et le SGSN. Le contrôleur d'interface Gb 40 assure la liaison physique avec le SGSN 5, ainsi que les procédures propres aux protocoles FR et BSSGP.

Les liaisons entre le PCU 22 et les BTS 20 à travers l'interface Agprs sont de type synchrone. En conséquence, les données manipulées par le PCU 22 entre le contrôleur d'interface Gb 40 et le contrôleur d'interface Agprs 42 transitent par une mémoire tampon 41 où sont enregistrées des files d'attente de paquets.

Entre le PCU 22 et la BTS 20, les informations sont portées par des trames de type TRAU (« Transcoder/Rate Adaptor Unit ») de 320 bits. Ces trames TRAU sont mises en forme et traitées par un module 44 et transmises par l'intermédiaire de circuits d'interface synchrone 45 qui réalisent des sous-voies MIC à 16 kbit/s avec les BTS 20. Dans les systèmes GSM, les voies à 64 kbit/s (DS0) sont habituellement subdivisées en quatre sous-voies dédiées chacune à un canal physique sur la radio. Plusieurs canaux (sous-voies) à 16 kbit/s sont multiplexés dans le temps sur l'interface Agprs et commutés par le BSC 21 pour l'acheminement vers les BTS.

Un module 46 du contrôleur d'interface Agprs 42 met en oeuvre les protocoles radio de la couche 2 du modèle ISO, à savoir les protocoles RLC/MAC (« Radio Link Control / Medium Access Control ») décrits dans la norme européenne ETSI EN 301 349, Digital cellular telecommunications system (Phase 2+) ; General Packet Radio Service (GPRS) ; Mobile Station (MS) - Base Station System (BSS) interface ; Radio Link Control/Medium Access Control (RLC/MAC) protocol (GSM 04.60, version 8.3.1, Release 1999), publiée par l'ETSI en octobre 2000.

La sous-couche RLC réalise l'interface avec le protocole de couche supérieure, appelé LLC (« Logical Link Control »). Elle assure la segmentation et le réassemblage des unités de données du protocole LLC (LLC-PDU), qui sont échangées de manière asynchrone sur l'interface Gb. Elle produit des blocs de données RLC auxquels la sous-couche MAC rajoute un en-tête MAC d'un octet.

Dans le sens descendant, du PCU vers les MS, l'en-tête MAC de chaque bloc RLC/MAC inclut :
- un champ USF de trois bits (« Uplink State Flag »), servant à indiquer quelle station mobile est autorisée à utiliser une ressource montante correspondant à la ressource descendante sur laquelle est transmise le bloc RLC/MAC ;
- un champ de contrôle d'acquittement de trois bits, incluant un sous-champ d'un bit S/P (« Supplementary/Polling ») indiquant si le champ de contrôle d'acquittement est actif (S/P = 1) ou inactif (S/P = 0) et un sous-champ de deux bits RRBP (« Relative Reserved Block Period ») spécifiant de manière unique un bloc montant dans lequel la station mobile destinataire doit transmettre un message d'acquittement ;
- un champ « Payload Type » de deux bits spécifiant le type de bloc RLC suivant (données, contrôle, ...).

On s'intéresse ici à la transmission de blocs de données RLC. Chacun de ces blocs comporte un en-tête RLC suivant l'octet d'en-tête MAC. Cet en-tête RLC comporte notamment les informations suivantes :
- identité de flux temporaire TFI (« Temporary Flow Identity »), composée de cinq bits identifiant le flux de blocs temporaire (TBF, « Temporary Block Flow ») d'où proviennent les données RLC du bloc. Un TBF est une connexion supportant le transfert unidirectionnel de LLC-PDU sur des canaux physiques de données. Un TBF est temporaire, c'est-à-dire qu'il n'est maintenu que pendant le transfert de données ;
- un numéro de séquence du bloc BSN (« Bloc Sequence Number ») de SNS bits, qui contient le numéro de séquence du bloc RLC/MAC dans le TBF, *modulo* 2^{SNS}, SNS étant un nombre prédéfini.

La sous-couche MAC gère en outre le multiplexage des blocs relevant des différents TBF actifs sur les canaux physiques disponibles, en arbitrant entre les différents utilisateurs mobiles par un mécanisme de planification (« scheduling »).

Dans le cas du GPRS, un niveau de protection variable contre les erreurs de transmission sur la radio peut être sélectionné bloc par bloc à l'intérieur d'un TBF, par le choix d'un schéma de codage CS (« Coding Scheme ») parmi quatre schémas CS-1 à CS-4 spécifiés dans la norme européenne ETSI EN 300 909, Digital cellular telecommunications system (Phase 2+) ; Channel coding (GSM 05.03, version 8.5.1, Release 1999), publiée par l'ETSI en novembre 2000.

Le schéma CS-4 n'utilise pas de codage correcteur d'erreurs, c'est-à-dire que le rendement de codage vaut 1 : seule une séquence de vérification de bloc (BCS « Block Check Sequence ») est adjointe aux blocs de données. Les schémas CS-1 à CS-3 utilisent un code convolutif de rendement 1/2 après l'adjonction de la séquence BCS. Aucun poinçonnage n'est effectué dans le schéma CS-1 (qui offre le plus haut niveau de protection), tandis que des poinçonnages sont appliqués dans les schémas CS-2 et CS-3 afin qu'ils donnent lieu à des rendements de codage globaux d'environ 2/3 et d'environ 3/4, respectivement.

Le codage de canal CS-i (1 ≤ i ≤ 4) est appliqué au niveau du protocole de couche physique, c'est-à-dire dans les BTS pour les liaisons descendantes. Chaque BTS comporte au moins une unité d'émission/réception (TRX) traitant huit canaux physiques multiplexés. Le multiplexage de ces huit canaux physiques est à partage temporel de type TDMA (« Time-Division Multiple Access »), avec des trames successives de 4,615 ms décomposées chacune en huit tranches temporelles. Un canal physique correspond à des tranches temporelles de rang correspondant dans la structure de trame. La fréquence d'émission sur un tel canal peut être fixe, ou variable d'une trame à l'autre si une méthode de saut de fréquence est appliquée. Chaque bloc RLC/MAC donne lieu à un bloc radio qui, après le codage de canal dans une unité TRX, se compose de 456 bits transmis dans des tranches temporelles correspondantes de quatre trames TDMA consécutives. Les 114 bits d'information codée de chaque tranche temporelle sont modulés pour être transmis sur l'interface radio selon une modulation par déplacement de phase à deux états de type GMSK (« Gaussian Minimum Shift Keying »).

Pour un canal physique de données (PDCH, « Physical Data Channel »), une multitrame dure 240 ms et se compose de 52 trames TDMA dont quatre sont inactives ou servent à la transmission d'informations de contrôle. Il y a ainsi douze blocs radio par multitrame, soit un bloc radio toutes les 20 ms.

Un motif de huit bits de signalisation SB est inséré dans chaque bloc radio (deux bits par tranche temporelle) afin d'indiquer notamment quel schéma de codage a été appliqué par l'émetteur.

Ces bits de signalisation sont extraits du bloc codé reçu par le destinataire, pour lui permettre d'identifier le schéma de codage. Le récepteur procède alors au décodage adéquat du bloc qui pourra donner lieu à un acquittement positif s'il est réussi et si la BCS décodée est cohérente avec le contenu du bloc.

Le schéma de codage appliqué sur la liaison descendante est déterminé de façon connue en soi par le PCU en fonction de mesures de qualité de réception sur le lien radio, selon des mécanismes d'adaptation de lien qui cherchent à atteindre un objectif en termes de taux de blocs erronés afin d'optimiser le débit brut. Le schéma sélectionné est inséré dans la trame TRAU portant le bloc pour être appliqué par la BTS.

Le Tableau I indique les débits de données offerts par les schémas de codage CS-1 à CS-4 d'un système GPRS. On voit qu'une sous-voie MIC à 16 kbit/s suffit pour acheminer du PCU à la BTS les informations relatives à une tranche temporelle de la trame TDMA d'une unité TRX lorsque le schéma appliqué est CS-1 ou CS-2, mais qu'une autre sous-voie devient nécessaire pour acheminer les données d'utilisateur, en plus des diverses informations de contrôle dont a besoin l'unité TRX (non incluses dans le calcul de débit du Tableau I), lorsque le schéma appliqué est CS-3 ou CS-4.

**TABLEAU I**

| Schéma | Modulation | Débit (kbit/s) | Nombre de sous-voies MIC requises |
|---|---|---|---|
| CS-1 | GMSK | 9,05 | 1 |
| CS-2 | GMSK | 13,4 | 1 |
| CS-3 | GMSK | 15,6 | 2 |
| CS-4 | GMSK | 21,4 | 2 |

Les normes précitées de l'ETSI spécifient aussi une extension du système GPRS, utilisant la modulation EDGE (« Enhanced Data for GSM Evolution »). Cette extension est appelée EGPRS (EDGE-GPRS). Elle utilise, en plus de la GMSK, une modulation par déplacement de phase à huit états (8-PSK, « 8-state Phase Shift Keying »), avec la même structure de trame TDMA et la même durée de symbole que dans le cas GPRS. Les symboles étant 8-aires au lieu de binaires, le débit brut peut être jusqu'à trois fois supérieur.

Dans un système EGPRS, la couche RLC/MAC utilise SNS = 11, et les en-têtes RLC et MAC sont regroupés en un seul en-tête RLC/MAC qui n'a plus le champ « Payload Type » et dans lequel le bit S/P est remplacé par un sous-champ ES/P de deux bits permettant de spécifier différents formats d'acquittement en cas de polling (ES/P ≠ 00). Neuf schémas de modulation et de codage, appelés MCS-1 à MCS-9, sont prévus. Le schéma utilisé pour un bloc donné, ainsi qu'un schéma de poinçonnage éventuellement appliqué, sont indiqués dans un champ CPS (« Coding and Puncturing Scheme indicator ») de l'en-tête RLC/MAC EGPRS.

L'ensemble de l'en-tête RLC/MAC EGPRS fait l'objet d'un codage de canal distinct de celui des données du bloc. Le niveau de protection de cet en-tête contre les erreurs de transmission est plus élevé que celui des données pour assurer une meilleure robustesse des informations de signalisation.

Le Tableau II indique les débits de données requis sur l'interface Abis par les schémas de codage MCS-1 à MCS-9 d'un système EGPRS pour chaque canal physique descendant. Une sous-voie MIC de 16 kbit/s ne suffit que pour les schémas MCS-1 et MCS-2. Jusqu'à cinq sous-voies peuvent être nécessaires en MCS-8 ou MCS-9.

**TABLEAU II**

| Schéma | Modulation | Débit (kbit/s) | Nombre de sous-voies MIC requises | Proportion d'utilisation |
|---|---|---|---|---|
| MCS-1 | GMSK | 10,45 | 1 | 20 % |
| MCS-2 | GMSK | 12,85 | 1 | 20 % |
| MCS-3 | GMSK | 16,45 | 2 | 0 % |
| MCS-4 | GMSK | 19,25 | 2 | 0 % |
| MCS-5 | 8-PSK | 24,35 | 2 | 30 % |
| MCS-6 | 8-PSK | 31,55 | 3 | 12 % |
| MCS-7 | 8-PSK | 47,3 | 4 | 10 % |
| MCS-8 | 8-PSK | 56,9 | 5 | 2 % |
| MCS-9 | 8-PSK | 61,7 | 5 | 6 % |

Il est à noter qu'en MCS-7, MCS-8 et MCS-9, deux blocs RLC/MAC sont transposés sur un bloc radio de 20 ms. Ainsi, le « bloc de données » à partir duquel peut être formé un bloc radio, et qui doit pouvoir être transmis du PCU à la BTS à raison d'un bloc toutes les 20 ms par canal physique, peut comporter plusieurs blocs RLC/MAC. Il comporte aussi diverses informations de contrôle utiles à la BTS pour la formation du bloc radio, en particulier la désignation du schéma de codage et/ou de modulation à appliquer.

Sur la liaison synchrone entre le PCU 22 et chaque unité TRX d'une BTS 20, il est prévu huit canaux dédiés constitués par des sous-voies MIC à 16 kbit/s Ces canaux dédiés à 16 kbit/s sont associés de façon fixe aux huit tranches temporelles de la trame TDMA descendante de l'unité TRX.

La capacité de transmission de 320 bits toutes les 20 ms par canal dédié associé à un canal physique suffit dans les schémas CS-1, CS-2, MCS-1 et MCS-2. Mais pour les autres schémas, il est nécessaire d'allouer des ressources de transmission supplémentaires sur la liaison synchrone. Pour cela, une ou plusieurs autres voies DS0 sont prévues pour chaque unité TRX de la BTS 20 au niveau du circuit d'interface synchrone 45 du PCU 22. Chaque voie DS0 ainsi ajoutée procure quatre canaux ou sous-voies MIC supplémentaires de 16 kbit/s, qui peuvent être commutés par les BSC 21 afin d'être acheminés vers les BTS appropriées.

Si N désigne le nombre de voies DS0 ainsi ajoutées aux deux voies DS0 portant les huit canaux dédiés sur la liaison synchrone entre le PCU 22 et une unité TRX, on dispose de 4.N canaux supplémentaires à 16 kbit/s qui peuvent être alloués dynamiquement aux canaux physiques traités par cette unité TRX. Le nombre N est choisi en fonction du trafic GPRS attendu dans la cellule desservie par la BTS, ce qui permet un dimensionnement optimal des liaisons MIC.

A titre d'exemple, pour une configuration de services typique dans une cellule urbaine desservie par une BTS 20 d'un système EGPRS, on peut estimer que les proportions d'application des schémas MCS-1 à MCS-9 aux utilisateurs sont comme indiqué dans la dernière colonne du Tableau II. Si cette BTS comporte une seule unité TRX pour le mode paquets EGPRS, le nombre moyen de sous-voies MIC requises pour cette unité TRX est d'environ 17,3 d'après les deux dernières colonnes du Tableau II. Un total de 5 voies DS0 est alors prévu pour l'unité TRX concernée au niveau du circuit d'interface 45 du PCU. Le multiplexage statistique des utilisateurs permet que ce total soit suffisant alors qu'une allocation entièrement fixe de sous-voies MIC requerrait huit voies DS0.

En référence à la figure 2, le module MAC 46 fournit toutes les 20 ms des données à transmettre respectivement dans k blocs radio sur les k canaux TDMA actifs de l'unité TRX considérée (k ≤ 8). Le module de segmentation 44 insère ces données dans des trames TRAU de 320 bits à raison de M trames par période d'émission de 20 ms pour chaque canal TDMA actif, le nombre M étant variable d'un canal physique à l'autre et dans le temps en fonction des schémas de codage et/ou de modulation appliqués, avec 1 ≤ M ≤ 5 (cf. Tableaux I et II).

Quand M = 1 pour un canal TDMA déterminé, la trame TRAU est simplement insérée dans la sous-voie MIC dédiée correspondante sur l'interface synchrone entre le PCU et la BTS.

A chaque canal TDMA pour lequel M > 1, le module 44 alloue M-1 des sous-voies MIC supplémentaires à 16 kbit/s. La première des M trames TRAU de la période d'émission considérée est transmise sur la sous-voies MIC dédiée associée à ce canal TDMA, et les M-1 trames suivantes sont respectivement transmises sur les M-1 sous-voies MIC supplémentaires qui lui ont été allouées. Le module de segmentation 44 insère dans chacune de ces M-1 trames TRAU suivantes des informations permettant à l'unité TRX de reconstituer le bloc de données à coder, à savoir :
- l'adresse, codée sur 3 bits, de la tranche temporelle correspondant au canal considéré dans la trame TDMA, la trame TRAU étant transmise sur la sous-voie MIC supplémentaire allouée dynamiquement à ce canal TDMA ;
- un numéro d'ordre de cette trame TRAU dans le bloc de données transmis pour cette tranche temporelle. Le nombre M-1 de sous-voies MIC supplémentaires allouées à un canal TDMA étant limité à 4, ce numéro d'ordre peut être codé sur 2 bits.

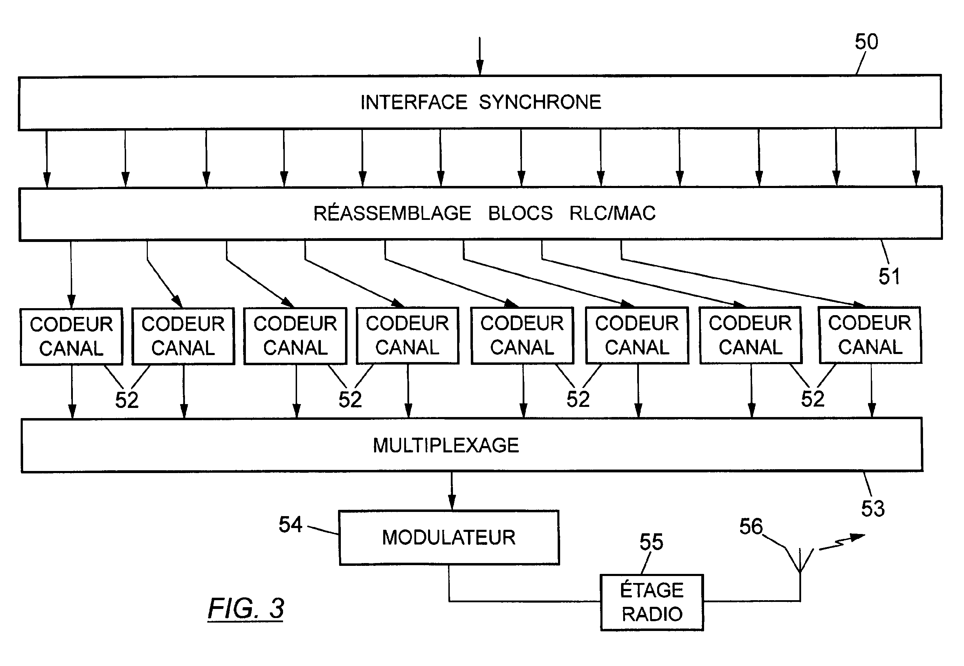

En référence à la figure 3, l'unité TRX de la BTS 20 comporte un circuit d'interface synchrone 50 qui reçoit les sous-voies MIC à 16 kbit/s formées par le PCU 22 et commutées par le BSC 21, et démultiplexe ces sous-voies pour restituer les trames TRAU qu'elles transportent. Ces trames sont fournies à un module 51 de réassemblage des blocs RLC/MAC. Celui-ci extrait les informations des trames TRAU pour reconstituer les blocs RLC/MAC destinés aux différents canaux physiques, ce qui lui permet aussi d'identifier les schémas de codage et/ou de modulation devant être appliqués à ces blocs RLC/MAC.

Lorsque le bloc de données relatif à un canal physique sur une période de 20 ms occupe M sous-voies MIC à 16 kbit/s avec M > 1, le bloc RLC/MAC correspondant est assemblé à partir des données reçues sur ces M sous-voies. Le module 51 détecte dans les sous-voies supplémentaires les adresses identifiant les canaux TDMA concernés, ainsi que les numéros d'ordre des trames TRAU dans le bloc, ce qui lui permet de réassembler simplement les blocs RLC/MAC.

Pour chaque canal physique, l'unité TRX comporte un codeur de canal 52 de rendement variable. Ce codeur 52 applique à chaque bloc RLC/MAC fourni par le module de réassemblage 51 un code de correcteur d'erreurs correspondant au schéma de codage et/ou de modulation que le module 51 a également récupéré dans la ou les trames TRAU concernées. Le rendement du codeur de canal 52 est ainsi adapté pour produire un bloc radio de taille fixe correspondant à 456 symboles à moduler.

Un multiplexeur 53 assure le multiplexage des blocs de données codés conformément à la structure de trame et de multitrame TDMA, et délivre le signal numérique ainsi formé au modulateur 54. Ce modulateur 54 forme les blocs de signal radio modulé qui sont traités par les circuits de l'étage radio 55 avant d'être émis par l'antenne 56 de la BTS.

Dans le cas d'un réseau GPRS, le modulateur 54 est un simple modulateur GMSK. Dans le cas EGPRS, il applique soit la modulation GMSK, soit la modulation 8-PSK dans chaque tranche temporelle, en fonction du schéma de codage et de modulation indiqué dynamiquement pour le canal TDMA.

## Revendications

1. Procédé d'émission de blocs de signal modulé sur des canaux physiques multiplexés, dans lequel les blocs de signal modulé sont formés par une station émettrice (20) à partir de blocs de données respectifs de taille variable reçus d'une source de données (22) sur une liaison synchrone à multiplexage temporel, et sont émis avec une cadence de blocs déterminée sur chaque canal physique, dans lequel la liaison synchrone entre la source de données et la station émettrice supporte des canaux dédiés respectivement associés auxdits canaux physiques, offrant chacun une capacité de transmission déterminée sur une période d'émission inverse de la cadence de blocs, et des canaux supplémentaires, et dans lequel une partie au moins de chaque bloc de données à partir duquel est formé un bloc de signal modulé émis sur un canal physique est transmise de la source de données à la station émettrice sur le canal dédié associé audit canal physique, et lorsque la taille dudit bloc de données dépasse ladite capacité de transmission, une autre partie dudit bloc de données est transmise sur au moins un canal supplémentaire de la liaison synchrone, alloué dynamiquement audit canal physique.

2. Procédé selon la revendication 1, dans lequel la station émettrice (20) applique à des données à coder extraites de chaque bloc de données un codage de canal de rendement adapté pour produire un bloc de signal modulé de taille fixe.

3. Procédé selon la revendication 1 ou 2, comprenant les étapes suivantes exécutées par la source de données (22) pour chaque période d'émission :
- construire au moins un bloc de données en vue de l'émission d'un bloc de signal modulé sur un canal physique respectif ;
- pour chaque bloc de données construit en vue de l'émission d'un bloc de signal modulé sur un canal physique et ayant une taille inférieure ou égale à ladite capacité de transmission, transmettre ledit bloc de données sur le canal dédié associé audit canal physique ; et
- si au moins un bloc de données construit en vue de l'émission d'un bloc de signal modulé sur un canal physique a une taille supérieure à ladite capacité de transmission, allouer audit canal physique au moins un canal supplémentaire de la liaison synchrone, transmettre une partie dudit bloc de données sur le canal dédié associé audit canal physique et une autre partie sur chaque canal supplémentaire respectivement alloué audit canal physique.

4. Procédé selon la revendication 3, dans lequel, sur chaque canal supplémentaire de la liaison synchrone alloué à un canal physique pour une période d'émission, on transmet une adresse identifiant ledit canal physique.

5. Procédé selon la revendication 4, dans lequel les canaux supplémentaires de la liaison synchrone offrent la même capacité que les canaux dédiés, et dans lequel, sur chaque canal supplémentaire de la liaison synchrone alloué à un canal physique pour une période d'émission, on transmet en outre un numéro d'ordre de la partie de bloc transmise sur ledit canal supplémentaire au sein bloc de données construit en vue de l'émission du bloc de signal modulé sur ledit canal physique.

6. Procédé selon l'une quelconque des revendications 3 à 5, dans lequel chaque bloc de données comporte des données à coder et des informations de contrôle incluant une indication d'un schéma de codage et/ou de modulation, et dans lequel la station émettrice (20) exécute les étapes suivantes pour chaque période d'émission :
- déterminer l'allocation des canaux supplémentaires de la liaison synchrone aux canaux physiques ;
- obtenir les données à coder des différents blocs de données sur les canaux dédiés et/ou sur les canaux supplémentaires respectivement alloués aux canaux physiques ; et
- produire chaque bloc de signal modulé à émettre sur un canal physique en codant et en modulant les données à coder correspondantes conformément au schéma indiqué relativement audit canal physique.

7. Procédé selon la revendication 6, dans lequel l'allocation des canaux supplémentaires de la liaison synchrone aux canaux physiques est déterminée par la station émettrice (20) sur la base d'indications transmises par la source de données (22) dans les canaux supplémentaires.

8. Source de données (22), comprenant :
- des moyens (46) de construction de blocs de données de taille variable en vue de l'émission de blocs de signal modulé respectifs sur des canaux physiques multiplexés par une station émettrice distante (20), les blocs de signal modulé étant émis avec une cadence de blocs déterminée sur chaque canal physique ;
- des moyens (44-45) de transmission des blocs de données à la station émettrice par une liaison synchrone supportant des canaux dédiés respectivement associés auxdits canaux physiques, offrant chacun une capacité de transmission déterminée sur une période d'émission inverse de la cadence de blocs, et des canaux supplémentaires ;
- des moyens (44) d'allocation dynamique d'au moins un canal supplémentaire de la liaison synchrone à chaque canal physique pour lequel a été construit un bloc de données de taille supérieure à ladite capacité de transmission ; et
- des moyens (44) de segmentation des blocs de données pour diviser chaque bloc de données, construit en vue de l'émission d'un bloc de signal modulé sur un canal physique et ayant une taille supérieure à ladite capacité de transmission, en une partie transmise sur le canal dédié associé audit canal physique, et au moins une autre partie transmise sur un canal supplémentaire de la liaison synchrone, respectivement alloué dynamiquement audit canal physique.

9. Source de données selon la revendication 8, dans laquelle chaque bloc de données comporte des données à coder et des informations de contrôle incluant une indication d'un schéma de codage et/ou de modulation à appliquer auxdites données à coder par la station émettrice (20).

10. Source de données selon la revendication 8 ou 9, dans laquelle les moyens de transmission des blocs de données (44) sont agencés pour transmettre, sur chaque canal supplémentaire de la liaison synchrone alloué à un canal physique pour une période d'émission, une adresse identifiant ledit canal physique.

11. Source de données selon la revendication 10, dans laquelle les canaux supplémentaires de la liaison synchrone offrent la même capacité que les canaux dédiés, et dans laquelle les moyens de transmission des blocs de données (44) sont agencés pour transmettre en outre, sur chaque canal supplémentaire de la liaison synchrone alloué à un canal physique pour une période d'émission, un numéro d'ordre de la partie de bloc transmise sur ledit canal supplémentaire au sein bloc de données construit en vue de l'émission du bloc de signal modulé sur ledit canal physique.

12. Station émettrice (20), comprenant :
- des moyens (52-54) de formation de blocs de signal modulé à partir de blocs de données respectifs de taille variable ;
- des moyens (53-56) d'émission des blocs de signal modulé sur des canaux physiques multiplexés, avec une cadence de blocs déterminée sur chaque canal physique ; et
- des moyens (50-51) de réception des blocs de données en provenance d'une source de données (22) par une liaison synchrone supportant des canaux dédiés respectivement associés auxdits canaux physiques, offrant chacun une capacité de transmission déterminée sur une période d'émission inverse de la cadence de blocs, et des canaux supplémentaires,
dans lequel les moyens de réception des blocs de données comprennent des moyens (51) pour déterminer une allocation dynamique de canaux supplémentaires de la liaison synchrone à au moins un des canaux physiques multiplexés au cours d'une période d'émission, et pour assembler chaque bloc de données ayant une taille supérieure à ladite capacité de transmission, avec une partie de bloc reçue sur un canal dédié associé à un canal physique et au moins une autre partie de bloc reçue sur un canal supplémentaire respectif de la liaison synchrone, alloué dynamiquement audit canal physique.

13. Station émettrice selon la revendication 12, dans laquelle chaque bloc de données comporte des données à coder et des informations de contrôle incluant une indication d'un schéma de codage et/ou de modulation, et dans laquelle les moyens de formation de blocs de signal modulé comprennent un codeur de canal (52) et un modulateur (54) commandés conformément à l'indication de schéma de codage et/ou de modulation reçue pour chaque canal physique, afin de produire un bloc de signal modulé de taille fixe.

14. Station émettrice selon la revendication 12 ou 13, dans laquelle les moyens (51) pour déterminer l'allocation dynamique des canaux supplémentaires de la liaison synchrone aux canaux physiques opèrent sur la base d'indications transmises par la source de données dans les canaux supplémentaires.

## Claims

1. Method for sending modulated-signal blocks on multiplexed physical channels, wherein the modulated-signal blocks are formed by a sending station (20) from respective data blocks of variable size received from a data source (22) on a time-division multiplexing synchronous link, and are sent with a specified block rate on each physical channel, wherein the synchronous link between the data source and the sending station supports dedicated channels respectively associated with the said physical channels, each offering a specified transmission capacity over a sending period inverse to the block rate, and supplementary channels, and wherein a part at least of each data block from which is formed a modulated-signal block sent on a physical channel is transmitted from the data source to the sending station on the dedicated channel associated with the said physical channel, and when the size of the said data block exceeds the said transmission capacity, another part of the said data block is transmitted on at least one supplementary channel of the synchronous link, allocated dynamically to the said physical channel.

2. Method as claimed in Claim 1, wherein the sending station (20) applies to data to be coded extracted from each data block a channel coding whose rate is tailored to produce a modulated-signal block of fixed size.

3. Method as claimed in Claim 1 or 2, comprising the following steps executed by the data source (22) for each sending period:
- construct at least one data block with a view to the sending of a modulated-signal block on a respective physical channel;
- for each data block constructed with a view to the sending of a modulated-signal block on a physical channel and having a size less than or equal to the said transmission capacity, transmit the said data block on the dedicated channel associated with the said physical channel; and
- if at least one data block constructed with a view to the sending of a modulated-signal block on a physical channel has a size greater than the said transmission capacity, allocate the said physical channel at least one supplementary channel of the synchronous link, transmit a part of the said data block on the dedicated channel associated with the said physical channel and another part on each supplementary channel respectively allocated to the said physical channel.

4. Method as claimed in Claim 3, wherein, on each supplementary channel of the synchronous link allocated to a physical channel for a sending period, an address identifying the said physical channel is transmitted.

5. Method as claimed in Claim 4, wherein the supplementary channels of the synchronous link offer the same capacity as the dedicated channels, and wherein, on each of the synchronous link's supplementary channels allocated to a physical channel for a sending period, there is furthermore transmitted a serial number of the block part transmitted on the said supplementary channel within data block constructed with a view to the sending of the modulated-signal block on the said physical channel.

6. Method as claimed in any one of Claims 3 to 5, wherein each data block comprises data to be coded and control information including an indication of a coding scheme and/or modulation scheme, and wherein the sending station (20) executes the following steps for each sending period:
- determine the allocation of the supplementary channels of the synchronous link to the physical channels;
- obtain the data to be coded of the various data blocks on the dedicated channels and/or on the supplementary channels respectively allocated to the physical channels; and
- produce each modulated-signal block to be sent on a physical channel by coding and by modulating the corresponding data to be coded in accordance with the scheme indicated in relation to the said physical channel.

7. Method as claimed in Claim 6, wherein the allocation of the supplementary channels of the synchronous link to the physical channels is determined by the sending station (20) on the basis of indications transmitted by the data source (22) in the supplementary channels.

8. Data source (22), comprising:
- means (46) of construction of data blocks of variable size with a view to the sending of respective modulated-signal blocks on multiplexed physical channels by a remote sending station (20), the modulated-signal blocks being sent with a specified block rate on each physical channel;
- means (44-45) of transmission of the data blocks to the sending station over a synchronous link supporting dedicated channels respectively associated with the said physical channels, each offering a specified transmission capacity over a sending period inverse to the block rate, and supplementary channels;
- means (44) of dynamic allocation of at least one supplementary channel of the synchronous link to each physical channel for which a data block of size greater than the said transmission capacity has been constructed, and
- means (44) of segmentation of the data blocks so as to divide each data block, constructed with a view to the sending of a modulated-signal block on a physical channel and having a size greater than the said transmission capacity, into a part transmitted on the dedicated channel associated with the said physical channel, and at least one other part transmitted on a supplementary channel of the synchronous link, respectively allocated dynamically to the said physical channel.

9. Data source as claimed in Claim 8, wherein each data block comprises data to be coded and control information including an indication of a coding scheme and/or modulation scheme to be applied to the said data to be coded by the sending station (20).

10. Data source as claimed in Claim 8 or 9, wherein the means of transmission of the data blocks (44) are devised so as to transmit, on each of the synchronous link's supplementary channels allocated to a physical channel for a sending period, an address identifying the said physical channel.

11. Data source as claimed in Claim 10, wherein the supplementary channels of the synchronous link offer the same capacity as the dedicated channels, and wherein the means of transmission of the data blocks (44) are devised so as furthermore to transmit, on each of the synchronous link's supplementary channels allocated to a physical channel for a sending period, a serial number of the block part transmitted on the said supplementary channel within data block constructed with a view to the sending of the modulated-signal block on the said physical channel.

12. spending station (20), comprising:
- means (52-54) of formation of modulated-signal blocks from respective data blocks of variable size;
- means (53-56) of sending of the modulated-signal blocks on multiplexed physical channels, with a specified block rate on each physical channel, and
- means (50-51) of reception of the data blocks originating from a data source (22) by a synchronous link supporting dedicated channels respectively associated with the said physical channels, each offering a specified transmission capacity over a sending period inverse to the block rate, and supplementary channels,
wherein the means of reception of the data blocks comprise means (51) for determining a dynamic allocation of supplementary channels of the synchronous link to at least one of the multiplexed physical channels during a sending period, and for assembling each data block having a size greater than the said transmission capacity, with a block part received on a dedicated channel associated with a physical channel and at least one other block part received on a respective supplementary channel of the synchronous link, which channel is allocated dynamically to the said physical channel.

13. Sending station as claimed in Claim 12, wherein each data block comprises data to be coded and control information including an indication of a coding scheme and/or modulation scheme, and wherein the means of formation of modulated-signal blocks comprise a channel coder (52) and a modulator (54) which are controlled in accordance with the coding and/or modulation scheme indication received for each physical channel, so as to produce a modulated-signal block of fixed size.

14. Sending station as claimed in Claim 12 or 13, wherein the means (51) for determining the dynamic allocation of the supplementary channels of the synchronous link to the physical channels operate on the basis of indications transmitted by the data source in the supplementary channels.

## Patentansprüche

1. Verfahren zum Senden von Blöcken eines modulierten Signals über geinultiplexte physikalische Kanäle, bei dem die Blöcke des modulierten Signals von einer sendenden Station (20) gemäß jeweiligen Datenblöcken von variabler Größe gebildet werden, die von einer Datenquelle (22) über eine synchrone Zeitmultiplexverbindung empfangen werden, und die mit einem vorgegebenen Blocktakt über jeden physikalischen Kanal gesendet werden, bei dem die synchrone Verbindung zwischen der Datenquelle und der Sendestationjeweils dedizierte physikalische Kanäle unterstützt, die den jeweiligen physikalischen Kanälen zugeordnet sind, von denen jeder eine Sendekapazität bietet, die über eine zum Blocktakt inverse Sendeperiode bestimmt wird, und Hilfskanäle, worin wenigstens ein Teil jedes Datenblockes aus dem ein Block des modulierten Signals gebildet wird, das über den physikalischen Kanal gesendet wird, von der Datenquelle zur Sendestation über den dedizierten dem physikalischen Kanal zugeordneten Kanal übertragen wird, und wenn die Größe des Datenblocks die Sendekapazität überschreitet, ein weiterer Teil des Datenblockes über wenigstens einen Hilfskanal der synchronen Verbindung übertragen wird, welcher dynamisch dem physikalischen Kanal zugeordnet wird.

2. Verfahron nach Anspruch 1, bei dem die Sendestation (20) auf die Daten zur Kodierung von Auszügen von jedem Datenblock eine Kanalkodierung anwendet mit einer Leistung, die so angepasst ist, dass sie einen Block des modulierten Signals von festgesetzter Größe erzeugt.

3. Verfahren nach Anspruch 1 oder 2 aufweisend folgende Schritte ausgeführt von der Datenquelle (22) in jedem Sendeabschnitt:
- Aufbau wenigstens eines Datenblockes mit Hinblick auf das Senden eines Blockes eines modulierten Signals über einen jeweiligen physikalischen Kanal;
- für jeden Datenblock, der mit Hinblick auf das Senden eines Blockes eines modulierten Signals über einen physikalischen Kanal aufgebaut ist und der eine Mindestgröße von der Größe wie die Sendekapazität hat, Übertragen des Datenblockes über den dedizierten zugeordneten Kanal über den physikalischen Kanal; und
- wenn wenigstens ein Datenblock, der mit Hinblick auf das Senden eines Blocks eines modulierten Signals über einen physikalischen Kanal konstruiert ist eine Größe hat, welche größer ist als die Sendekapazität, Zuweisen diesem physikalischen Kanal wenigstens einen Hilfskanal der synchronen Verbindung, Übertragen eines Teils des Datenblockes über den zu dem physikalischen Kanal dedizierten zugeordneten Kanal und einen anderen Teil über jeden Hilfskanal, der jeweils dem physikalischen Kanal zugeordnet ist.

4. Verfahren nach Anspruch 3, bei dem über jeden Hilfskanal der synchronen Verbindung, der einem physikalischen Kanal für einen Sendeabschnitt zugeordnet ist, eine Kennungsadresse des physikalischen Kanals übertragen wird.

5. Verfahren nach Anspruch 4, bei dem die Hilfskanäle der synchronen Verbindung die gleiche Kapazität bieten, wie die dedizierten Kanäle, und bei dem über jeden Hilfskanal der synchronen Verbindung, welche einem physikalischen Kanal für einen Sendeabschnitt zugeordnet ist, unter anderem eine Ordnungsnummer des über den Hilfskanal übertragenen Blockes inmitten des Datenblockes übertragen wird, der mit Hinblick auf das Senden des Blockes eines modulierten Signals über den physikalischen Kanal aufgebaut ist.

6. Verfahren gemäß irgendeinem der Ansprüche 3 bis 5, bei dem jeder Datenblock Daten zur Kodierung aufweist und Steuerungsinformationen, welche eine Angabe eines Kodierungsschemas und /oder Modulationsschemas enthalten, und bei dem die Sendestation (20) die folgenden Schritte in jedem Sendeabschnitt ausführt:
- Bestimmen der Zuordnung der Hilfskanäle der synchronen Verbindung zu den physikalischen Kanälen;
- Beziehen von zu kodierenden Daten von verschiedenen Datenblöcken über die dedizierten Kanäle und /oder über die Hilfskanäle, die jeweils den physikalischen Kanälen zugeordnet sind; und
- Erzeugen jedes Blocks des modulierten Signals zum Senden über einen physikalischen Kanal durch Kodieren und Modulieren der Daten, um entsprechende zu erzeugen, die dem Schema entsprechen, das für den jeweiligen physikalischen Kanal angegeben ist.

7. Verfahren gemäß Anspruch 6, bei dem die Zuordnung von Hilfskanälen der synchronen Verbindung zu den physikalischen Kanälen von der Sendestation (20) aufgrund von Angaben bestimmt wird, die von der Datenquelle (22) über die Hilfskanäle gesendet werden.

8. Datenquelle (22) aufweisend:
- Mittel zur Konstruktion von Datenblöcken von variabler Größe mit Hinblick auf das Senden von jeweiligen Blöcken eines modulierten Signals über gemultiplexte physikalische Kanäle durch eine entfernte Sendestation (20), wobei die Blöcke des modulierten Signals mit einem vorbestimmten Blocktakt über den physikalischen Kanal gesendet worden;
- Mittel (44-45) zum Übertragen der Datenblöcke zur Sendestation über eine synchrone Verbindung, welche dedizierte Kanäle unterstützt, die jeweils den physikalischen Kanälen zugeordnet sind, von denen jeder eine Sendekapazität bietet, die für einen Sendeabschnitt bestimmt wird und invers zum Blocktakt ist, und über Hilfskanäle;
- Mittel (44) zur dynamischen Zuordnung von wenigstens einem Hilfskanal der synchronen Verbindung zu jedem physikalischen Kanal, für welchen ein Datenblock von größerer Größe als die Sendekapazität konstruiert wurde; und
- Mittel (44) zur Segmentierung der Datenblöcke, um jeden Datenblock aufzuteilen, der mit Hinblick auf das Senden eines Blocks eines modulierten Signals über einen physikalischen Kanal aufgebaut wurde, und der eine größere Größe hat, als die Sendekapazität, in einen Teil, der über den dedizierten Kanal übertragen wird, welcher dem physikalischen Kanal zugeordnet ist und in wenigstens einen anderen Teil, der über einen Hilfskanal der synchronen Verbindung übertragen wird, welcher jeweils dynamisch dem physikalischen Kanal zugewiesen wird.

9. Datenquelle nach Anspruch 8, bei der jeder Datenblock Daten zur Kodierung enthält und Steuerungsinformationen einschließlich einer Kennung eines Kodierungsschemas und /oder Modulationsschema zur Anwendung auf die Daten zur Kodierung durch die Sendestation (20).

10. Datenquelle nach Anspruch 8 oder 9, bei der die Mittel zum Senden von Datenblöcken (44) zum Senden über jeden Hilfskanal der synchronen Verbindung, welche dem physikalischen Kanal für einen Sendeabschnitt zugeordnet sind, angeordnet sind, wobei eine Adresse diesen physikalischen Kanal kennzeichnet.

11. Datenquelle nach Anspruch 10, bei der die Hilfskanäle der synchronen Verbindung die gleiche Kapazität wie die dedizierten Kanäle bieten, und in der die Sendemittel der Datenblöcke (54) dazu angeordnet sind, um unter anderem über jeden Hilfskanal der synchronen Verbindung, welcher einem physikalischen Kanal für einen Sendeabschnitt zugeordnet ist, eine Ordnungsnummer des Teils des gesendeten Blockes zu übertragen, der über den Hilfskanal inmitten des Datenblockes übertragen wird, welcher mit Hinblick auf das Senden eines Blocks eines modulierten Signals über den physikalischen Kanal konstruiert wurde.

12. Sendestation (20) aufweisend:
- Mittel (52-54) zum Bilden von Blöcken eines modulierten Signals aus jeweiligen Datenblöcken von variabler Größe;
- Mittel (53-56) zum Senden von Blöcken des modulierten Signals über gemultiplexte physikalische Kanäle, mit einem vorgegebenen Blocksendetakt über jeden physikalischen Kanal; und
- Mittel (50-51) zum Empfang von Datenblöcken mit Herkunft von einer Datenquelle (22) über eine synchrone Verbindung, welche dedizierte Kanäle unterstützt, die jeweils physikalischen Kanälen zugeordnet sind, von denen jeder eine Sendekapazität bietet, die für einen Sendeabschnitt bestimmt ist, invers zum Blocktakt, und über Hilfskanäle; wobei die Mittel zum Empfang der Datenblöcke Mittel (51) zur Bestimmung einer dynamischen Zuordnung von Hilfskanälen der synchronen Verbindung zu wenigstens einem der gemultiplexten physikalischen Kanäle im Verlauf eines Sendeabschnitts enthalten und zum Zusammenfügen jedes Datenblockes, der eine größere Größe hat als die Sendekapazität, mit einem Teil des Blockes, der über einen dedizierten Kanal empfangen wird, welcher einem physikalischen Kanal zugeordnet ist und wenigstens einem anderen Teil des Blockes, der über einen jeweiligen Hilfskanal der synchronen Verbindung empfangen wird und dynamisch dem physikalischen Kanal zugewiesen wird.

13. Sendestation nach Anspruch 12, bei der jeder Datenblock Daten zur Kodierung enthält und Steuerungsinformationen, welche eine Kennung eines Kodierungsschemas und /oder Modulationssehemas enthalten, und in der die Mittel zur Bildung von Blöcken des modulierten Signals einen Kanalkodierer (22) und Modulator (54) aufweisen, die in Übereinstimmung mit der Angabe des Kodierungsschemas und /oder des Modulationsschemas gesteuert werden, das für jeden physikalischen Kanal empfangen wird, um einen Block eines modulierten Signals von fester Größte zu erzeugen.

14. Sendestation nach Anspruch 12 oder 13, bei der die Mittel (51) zur Bestimmung der dynamischen Zuordnung der Hilfskanäle der synchronen Verbindung zu physikalischen Kanälen aufgrund von Angaben arbeiten, die von der Datenquelle über die Hilfskanäle übertragen werden.
